# EUROPEAN PATENT APPLICATION

(11) **EP 3 609 288 A1**
(43) Date of publication of application: **12.02.2020**
(21) Application number: 18795274.2
(22) Date of filing: 27.04.2018
(51) Int. Cl.: H04W 76/22, H04W 76/15

(54) **METHOD AND APPARATUS FOR SUPPORTING BEARER TYPE CHANGE IN WIRELESS COMMUNICATION SYSTEM**

(30) Priority: 02.05.2017 US 201762492964 P; 03.11.2017 US 201762581055 P
(71) Applicant: LG Electronics Inc., Seoul 07336 (KR)
(72) Inventor: XU, Jian, Seoul 06772 (KR); BYUN, Daewook, Seoul 06772 (KR); KIM, Seokjung, Seoul 06772 (KR)
(74) Representative: Maikowski & Ninnemann Patentanwälte Partnerschaft mbB
(86) International application number: PCT/KR2018/004896
(87) International publication number: WO 2018/203619

(57) **Abstract**

Provided is a method for performing a bearer type change procedure between a secondary cell group (SCG) bearer and a SCG split bearer in a wireless communication system. According to various scenarios, a bearer type change from the SCG bearer to the SCG split bearer or a bearer type change from the SCG split bearer to the SCG bearer can be performed, and a procedure therefor can be initiated by a secondary node (SN) or a master node (MN) having dual connectivity. When the SN initiates the bearer type change procedure, the SN transmits, to the MN, an instruction for the bearer type change between the SCG bearer and the SCG split bearer, receives, from the MN, an instruction to accept the bearer type change, and performs the bearer type change.

## Description

### TECHNICAL FIELD

The present disclosure relates to wireless communication, and more particularly, to a method and apparatus for supporting a bearer type change in a wireless communication system.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. The NR system may be called another name, e.g. new radio access technology (new RAT). 3GPP has to identify and develop the technology components needed for successfully standardizing the NR timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

According to new architecture for the 5G core network and 5G radio access network (RAN) including NR, a user equipment (UE) may receive a better service in view of throughput and UE experience. Also, tight interworking of LTE/NR is under discussion. Due to tight interworking of LTE/NR, interworking between an eNodeB (eNB) and a new RAN node (for example, gNB) is allowed, and as a result, throughput of a UE may be improved. An eNB of the LTE and gNB of the NR may manage resources individually. More specifically, dual/multiple connections for improving throughput of a UE according to the tight interworking of LTE/NR may be used, and signaling for UE mobility may be simplified.

### SUMMARY

In the conventional dual connectivity of LTE, only a MCG split bearer that separates a portion of a master cell group (MCG) bearer into a SCG bearer was supported, and a secondary cell group (SCG) split bearer that separates a portion of the SCG bearer into the MCG bearer was not supported. However, for dual connectivity of LTE/NR and/or tight interworking of LTE/NR, a split bearer through the SCG (hereinafter, SCG split bearer) may be introduced. According to the introduction of the SCG split bearer, a bearer type change between the SCG bearer and the SCG split bearer may be performed. A method of performing a bearer type change which a secondary node (SN) of dual connectivity of LTE/NR and/or tight interworking of LTE/NR initiates, and without releasing a bearer is required.

In an aspect, a method of performing a bearer type change procedure between a secondary cell group (SCG) bearer and an SCG split bearer by a secondary node (SN) of dual connectivity in a wireless communication system is provided. The method includes transmitting an indication of a bearer type change between the SCG bearer and the SCG split bearer to a master node (MN) of the dual connectivity, receiving an indication that accepts the bearer type change from the MN, and performing the bearer type change.

In another aspect, a secondary node (SN) of dual connectivity in a wireless communication system is provided. The SN includes a memory, a transceiver, and a processor connected to the memory and the transceiver. The processor is configured to control the transceiver to transmit an indication of a bearer type change between a secondary cell group (SCG) bearer and an SCG split bearer to a master node (MN) of the dual connectivity, control the transceiver to receive an indication that accepts the bearer type change from the MN, and perform the bearer type change.

In tight interworking of LTE/NR, an SN can efficiently initiate and perform a bearer type change between a SCG bearer and a SCG split bearer without releasing a bearer.

### BRIEF DESCRIPTION OF THE DRAWINGS

FIG. 1 shows 3GPP LTE system architecture.
FIG. 2 shows an NG-RAN architecture.
FIG. 3 shows EN-DC architecture.
FIG. 4 shows option 3/3a/3x of the deployment scenario for tight interworking of LTE/NR.
FIG. 5 shows option 4/4a of the deployment scenario for tight interworking of LTE/NR.
FIG. 6 shows option 7/7a/7x of the deployment scenario for tight interworking of LTE/NR.
FIG. 7 shows a split bearer through MCG.
FIG. 8 shows a split bearer through SCG.
FIG. 9 shows an example of a bearer type change procedure according to an embodiment of the present disclosure.
FIG. 10 shows another example of a bearer type change procedure according to an embodiment of the present disclosure.
FIG. 11 shows another example of a bearer type change procedure according to an embodiment of the present disclosure.
FIG. 12 shows another example of a bearer type change procedure according to an embodiment of the present disclosure.
FIG. 13 shows another example of a bearer type change procedure according to an embodiment of the present disclosure.
FIG. 14 shows a method of performing a bearer type change procedure between an SCG bearer and an SCG split bearer by an SN of dual connectivity according to an embodiment of the present disclosure.
FIG. 15 shows a wireless communication system in which an embodiment of the present disclosure is implemented.
FIG. 16 shows the processors of the RAN node 1 and the RAN node 2 shown in FIG. 15.

### DETAILED DESCRIPTION

Hereinafter, in the present disclosure, a wireless communication system based on a 3rd generation partnership project (3GPP) or institute of electrical and electronics engineers (IEEE) is mainly described. However, the present disclosure is not limited thereto, and the present disclosure may be applied to other wireless communication systems having the same characteristics to be described hereinafter.

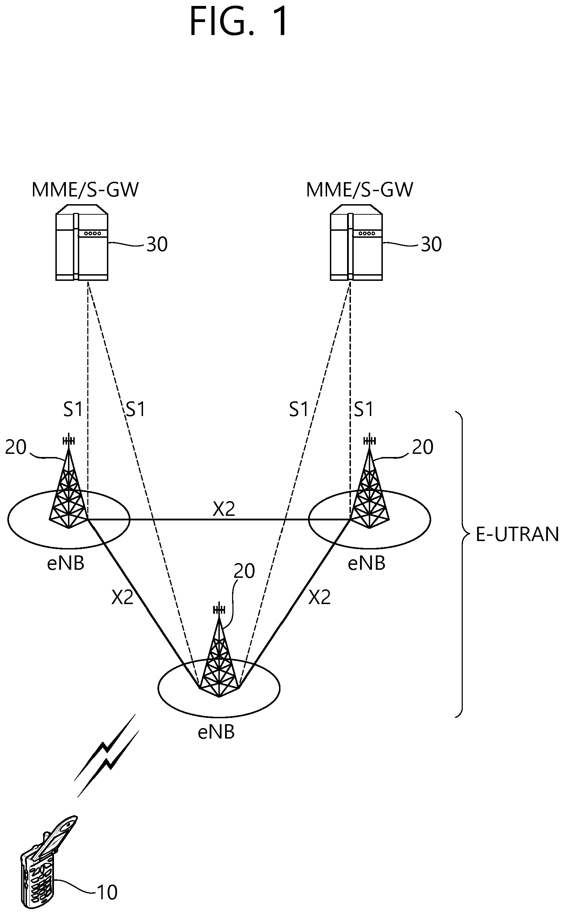

FIG. 1 shows 3GPP LTE system architecture. Referring to FIG. 1, the 3GPP long-term evolution (LTE) system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

The EPC includes a mobility management entity (MME) and a serving gateway (S-GW). The MME/S-GW 30 provides an end point of session and mobility management function for the UE 10. For convenience, MME/S-GW 30 will be referred to herein simply as a "gateway", but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. The eNB 20 is connected to the gateway 30 via an S1 interface.

5G system is a 3GPP system consisting of 5G access network (AN), 5G core network (CN) and UE. 5G access network is an access network comprising a next generation radio access network (NG-RAN) and/or non-3GPP access network connecting to a 5G core network. NG-RAN is a radio access network that supports one or more of the following options with the common characteristics that it connects to 5G core network:
1) Standalone new radio (NR).
2) NR is the anchor with E-UTRA extensions.
3) Standalone E-UTRA.
4) E-UTRA is the anchor with NR extensions.

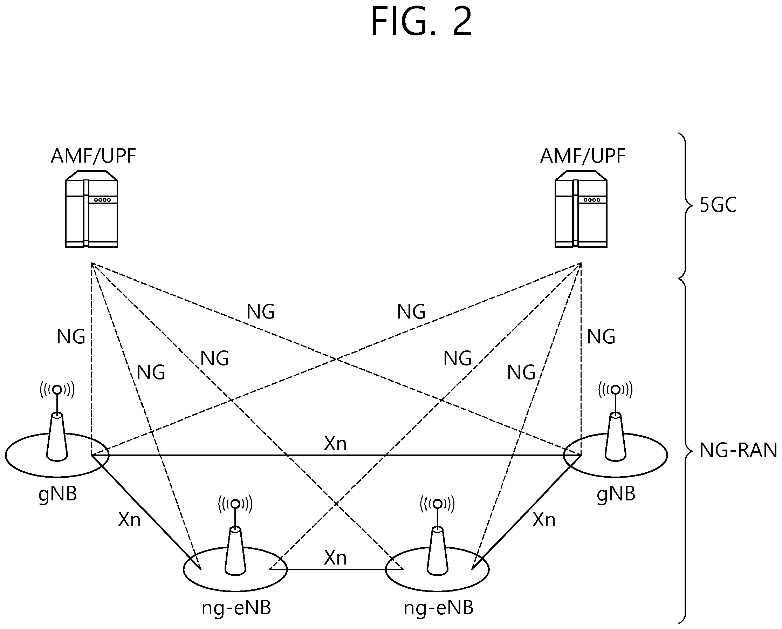

FIG. 2 shows an NG-RAN architecture. Referring to FIG. 2, the NG-RAN includes at least one NG-RAN node. The NG-RAN node includes at least one gNB and/or at least one ng-eNB. The gNB provides NR user plane and control plane protocol terminations towards the UE. The ng-eNB provides E-UTRA user plane and control plane protocol terminations towards the UE. The gNBs and ng-eNBs are interconnected with each other by means of the Xn interface. The gNBs and ng-eNBs are also connected by means of the NG interfaces to the 5G CN. More specifically, the gNBs and ng-eNBs are connected to the access and mobility management function (AMF) by means of the NG-C interface and to the user plane function (UPF) by means of the NG-U interface.

The gNB and ng-eNB host the following functions:
- Functions for radio resource management: Radio bearer control, radio admission control, connection mobility control, dynamic allocation of resources to UEs in both uplink and downlink (scheduling);
- Internet protocol (IP) header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or operations & maintenance (O&M));
- Measurement and measurement reporting configuration for mobility and scheduling;
- Transport level packet marking in the uplink;
- Session management;
- Support of network slicing;
- QoS flow management and mapping to data radio bearers;
- Support of UEs in RRC_INACTIVE state;
- Distribution function for non-assess stratum (NAS) messages;
- Radio access network sharing;
- Dual connectivity;
- Tight interworking between NR and E-UTRA.

The AMF hosts the following main functions:
- NAS signaling termination;
- NAS signaling security;
- AS security control;
- Inter CN node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session management function (SMF) selection.

The UPF hosts the following main functions:
- Anchor point for Intra-/Inter-radio access technology (RAT) mobility (when applicable);
- External protocol data unit (PDU) session point of interconnect to data network;
- Packet routing & forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink traffic verification (service data flow (SDF) to QoS flow mapping);
- Downlink packet buffering and downlink data notification triggering.

The SMF hosts the following main functions:
- Session management;
- UE IP address allocation and management;
- Selection and control of UP function;
- Configures traffic steering at UPF to route traffic to proper destination;
- Control part of policy enforcement and QoS;
- Downlink data notification.

In what follows, multi-RAT dual connectivity will be described. NG-RAN supports multi-RAT dual connectivity configured so that a UE in the RRCCONNECTED state with multiple RX/TX may use radio resources provided by two separate schedulers. Multi-RAT dual connectivity is generalization of the E-UTRA dual connectivity. Two separate schedulers are located at two different NG-RAN nodes connected to each other through a non-ideal backhaul. One of the two different NG-RAN nodes performs the role of a master node (MN), and the other one performs the role of a secondary node (SN). In other words, one scheduler is located at the MN while the other scheduler is located at the SN. The two different NG-RAN nodes provide either the E-UTRA connectivity (when the NG-RAN node is an ng-eNB) or NR connectivity (when the NG-RAN node is a gNB). The ng-eNB is a node that provides the NR user plane and control plane protocol termination toward a UE and operates as an SN in the E-UTRAN-NR dual connectivity (EN-DC). The gNB is a node that provides the E-UTRA user plane and control plane protocol termination toward a UE and is connected to 5G CN through an NG interface. The MN and SN are connected to each other through a network interface, and at least the MN is connected to the core network. Although multi-RAT dual connectivity in the present disclosure has been designed based on a non-ideal backhaul between different nodes, the multi-RAT dual connectivity may also be used for an ideal backhaul.

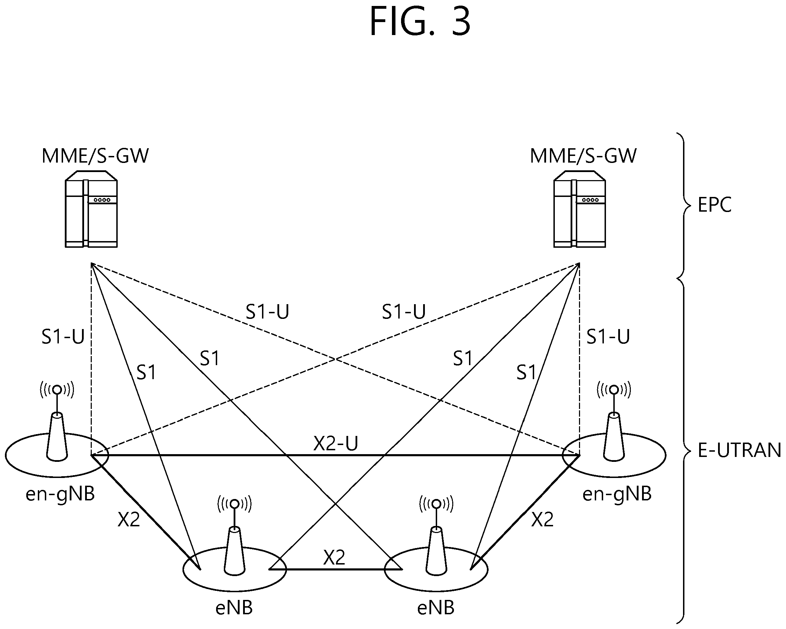

FIG. 3 shows EN-DC architecture. The E-UTRAN supports multi-RAT dual connectivity through EN-DC, where a UE is connected to one eNB operating as an MN and one en-gNB operating as an SN. An eNB is connected to EPC through S1 interface and connected to en-gNB through X2 interface. The en-gNB may be connected to the EPC through S1-U interface and connected to a different en-gNB through X2-U interface.

The 5G CN also supports multi-RAT dual connectivity. An NG-RAN supports NG-RAN E-UTRA-NR dual connectivity (NGEN-DC), where a UE is connected to one ng-eNB operating as an MN and one gNB operating as an SN. The ng-eNB is connected to the 5G CN, and the gNB is connected to the ng-eNB through Xn interface. Also, the NG-RAN supports NR-E-UTRA dual connectivity (NE-DC), where a UE is connected to one gNB operating as an MN and one ng-eNB operating as an SN. The gNB is connected to the 5G CN, and ng-eNB is connected to the gNB through Xn interface.

To support the aforementioned multi-RAT dual connectivity and/or tight interworking of LTE/NR, various disposition scenarios for LTE and NR may be considered.

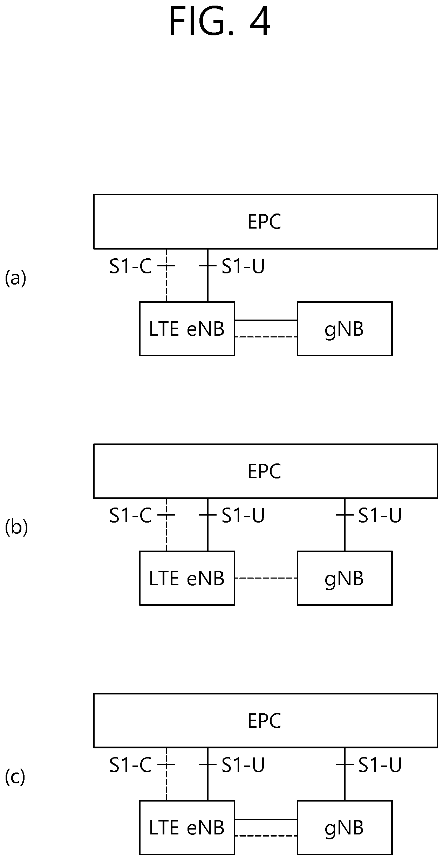

FIG. 4 shows option 3/3a/3x of the deployment scenario for tight interworking of LTE/NR. FIG. 4(a) may be referred to as option 3, FIG. 4(b) as option 3a, and FIG. 4(c) as option 3x. In option 3/3a/3x, the LTE eNB is connected to the EPC with non-standalone NR. In other words, NR control plane is not directly connected to the EPC but connected through the LTE eNB. The NR user plane is connected to the EPC via the LTE eNB (option 3) or directly via the S1-U interface (option 3a). Or the user plane connected directly through the S1-U interface is split to the LTE eNB in the gNB (option 3x). The option 3/3a/3x correspond to the EN-DC architecture described in detail with reference to FIG. 3.

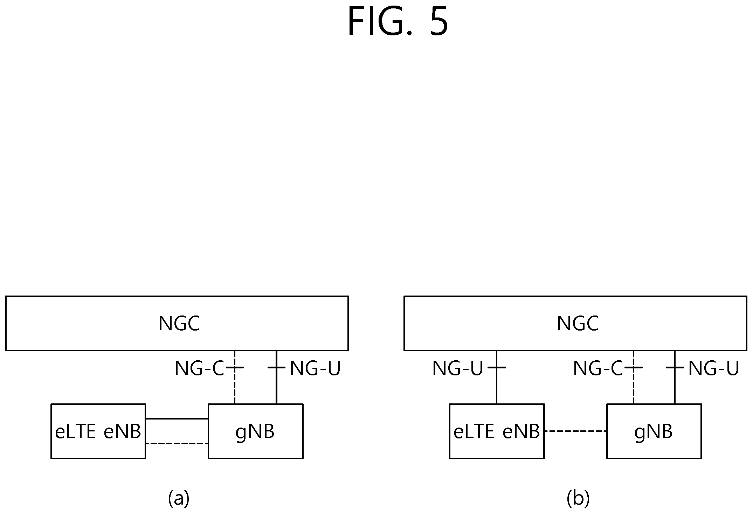

FIG. 5 shows option 4/4a of the deployment scenario for tight interworking of LTE/NR. FIG. 5(a) may be referred to as option 4, and FIG. 5(b) as option 4a. In option 4/4a, the gNB is connected to the NGC with non-standalone E-UTRA. In other words, the E-UTRA control plane is not directly connected to the NGC but connected through the gNB. The E-UTRA user plane is connected to the NGC via the gNB (option 4) or directly through the NG-U interface (option 4a). The option 4/4a correspond to the option 3/3a with the E-UTRA and NR interchanged.

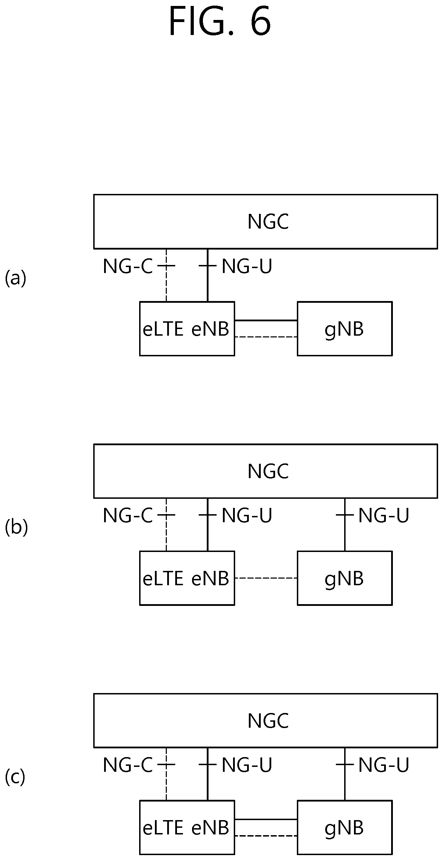

FIG. 6 shows option 7/7a/7x of the deployment scenario for tight interworking of LTE/NR. FIG. 6(a) may be referred to as option 7, FIG. 6(b) as option 7a, and FIG. 6(c) as option 7x. In option 7/7a/7x, the eLTE eNB (namely ng-eNB) is connected to the NGC with non-standalone NR. In other words, NR control plane is not directly connected to the NGC but connected through the eLTE eNB. The NR user plane is connected to the NGC via the eLTE eNB (option 7) or directly through the NG-U interface (option 7a). Or the user plane connected directly through the NG-U interface is split to the eLTE eNB in the gNB (option 7x).

The following three bearer types may be considered for dual connectivity of LTE/NR.
- Split bearer through master cell group (MCG): This is similar to the option 3C of the dual connectivity architecture of the conventional LTE
- Secondary cell group (SCG) bearer: This is similar to the option 1A of the dual connectivity architecture of the conventional LTE.
- Split bearer through SCG: Bearer split occurs at the SN.

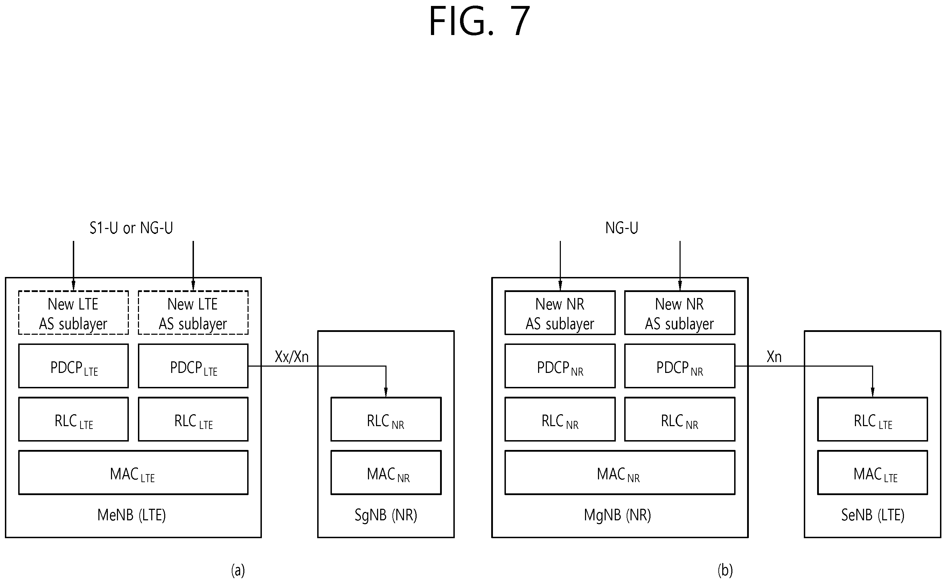

FIG. 7 shows a split bearer through MCG. In FIG. 6-(a), the MN is eNB (namely master eNB (MeNB)), and the SN is gNB (namely, SgNB). In FIG. 7-(a), MeNB/SgNB is connected to the core network through S1-U or NG-U. The MCG bearer is constructed in the MeNB side via a new LTE AS sublayer. A split bearer through MCG passes through the new LTE AS sublayer in the MeNB side, branches in the PDCP layer, and is delivered to the RLC layer of SgNB through Xx/Xn interface. In FIG. 7-(b), the MN is gNB (namely MgNB), and SN is eNB (namely secondary eNB (SeNB)). In FIG. 7-(b), MgNB/SeNB is connected to the core network through NG-U. The MCG bearer is constructed in the MgNB side via a new NR AS sublayer. A split bearer through MCG passes through the new NR AS sublayer in the MgNB side, branches in the PDCP layer, and is delivered to the RLC layer of SeNB through Xn interface.

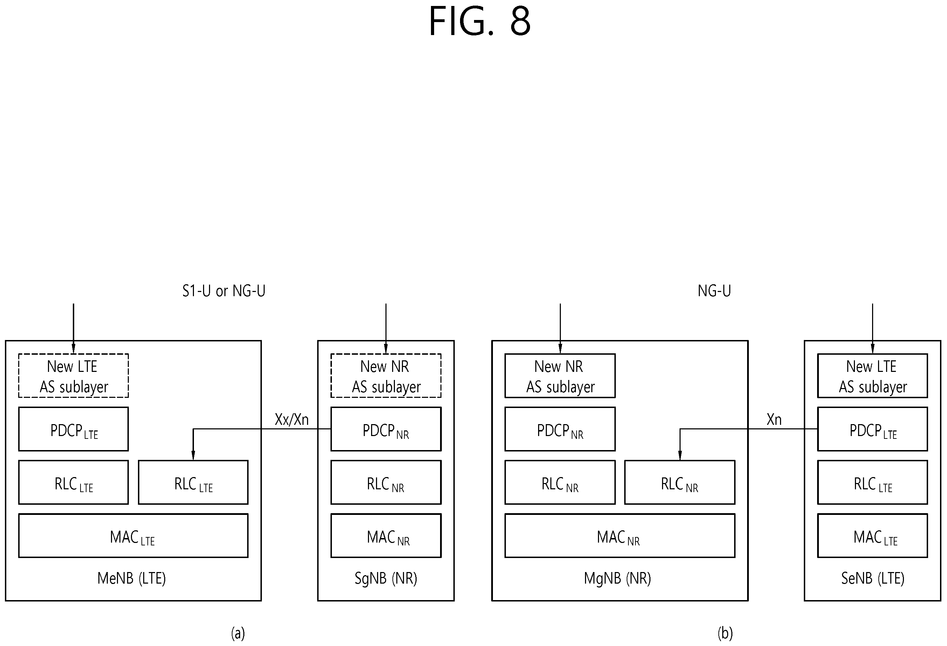

FIG. 8 shows a split bearer through SCG. In FIG. 8-(a), the MN is eNB (namely MeNB), and the SN is gNB (namely, SgNB). In FIG. 8-(a), MeNB/SgNB is connected to the core network through S1-U or NG-U. The MCG bearer is constructed in the MeNB side via a new LTE AS sublayer. A split bearer through SCG passes through the new NR AS sublayer in the SgNB side, branches in the PDCP layer, and is delivered to the RLC layer of MeNB through Xx/Xn interface. In FIG. 8-(b), the MN is gNB (namely MgNB), and SN is eNB (namely SeNB). In FIG. 8-(b), MgNB/SeNB is connected to the core network through NG-U. The MCG bearer is constructed in the MgNB side via a new NR AS sublayer. A split bearer through SCG passes through the new LTE AS sublayer in the SeNB side, branches in the PDCP layer, and is delivered to the RLC layer of MgNB through Xn interface.

The three bearer types mentioned above may be supported irrespective of a connected core network except for the split bearer through SCG when the master node is gNB. Related to reconfiguration of the bearer type, reconfiguration between an SCG bearer and MCG bearer, reconfiguration of the SCG bearer between two different secondary nodes, and reconfiguration between MCG bearer and MCG split bearer may be supported.

As described above, for dual connectivity of LTE/NR and/or tight interworking of LTE/NR, a split bearer through the SCG (hereinafter, SCG split bearer) may be introduced. When data packets are directed towards the gNB operating as an SN to overload the SCG bearer or when a quality of the SCG bearer is poor, a SCG split bearer may be used. That is, when it is advantageous to transmit a portion of the data packet transmitted through the SCG bearer through the MCG bearer, the SCG split bearer may be used.

It is preferable that a node that determines whether to use the SCG split bearer by separating a portion of the data packet transmitted through the SCG bearer toward the MCG bearer is a gNB operating as an SN. This is because a data packet is currently transmitted through an SCG bearer, and a node that may best determine whether to use an SCG split bearer is a gNB operating as an SN. This is different from the conventional dual connectivity of LTE. In the conventional dual connectivity of LTE, a SCG split bearer was not supported, but only a MCG split bearer was supported, and a node that determines whether to split a MCG bearer into a MCG split bearer was MeNB.

Hereinafter, in dual connectivity of LTE/NR and/or tight interworking of LTE/NR, a method of triggering and performing a bearer type change between an SCG bearer and an SCG split bearer proposed by the present disclosure between an MN and an SN will be described through the embodiment. Additionally, a method of triggering and performing a bearer type change from the SCG bearer/SCG split bearer to the MCG bearer/MCG split bearer or a bearer type change from the MCG bearer/MCG split bearer to the SCG bearer/SCG split bearer proposed by the present disclosure between the MN and the SN will be also described through an embodiment.

Table 1 shows four cases of a bearer type change between SCG bearer and SCG split bearer that may occur in dual connectivity of LTE/NR and/or tight interworking of LTE/NR.

**[Table 1]**

| Bearer Type Change | Triggering node: MN or SN |
|---|---|
| Change from SCG bearer to SCG split bearer | Case 1: SN trigger |
| | Case 2: MN trigger |
| Change from SCG split bearer to SCG bearer | Case 3: SN trigger |
| | Case 4: MN trigger |

Referring to Table 1, for the bearer type change between the SCG bearer and the SCG split bearer, there are four cases of 1) a bearer type change, triggered by the SN, from the SCG bearer to the SCG split bearer, 2) a bearer type change, triggered by MN, from the SCG bearer to the SCG split bearer, 3) a bearer type change, triggered by the SN, from the SCG split bearer to the SCG bearer, and 4) a bearer type change, triggered by the MN, from the SCG split bearer to the SCG bearer.

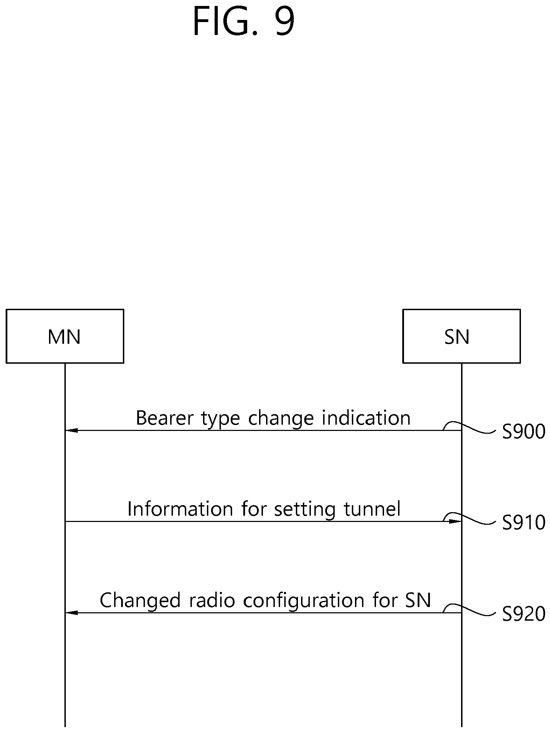

FIG. 9 shows an example of a bearer type change procedure according to an embodiment of the present disclosure. FIG. 9 shows a bearer type change procedure, triggered by the SN, from SCG bearer to the SCG split bearer. When the SCG bearer is overloaded or when a quality of the SCG bearer is poor, the SN may initiate a bearer type change procedure that splits the SCG bearer into the SCG split bearer. In the foregoing description, the MN may be either an eNB or a gNB, and the SN may be a gNB.

In step S900, the SN transmits a message including a bearer type change indication to the MN. The bearer type change indication may indicate that the SN wants to change a bearer type from the SCG bearer to the SCG split bearer. The bearer type change indication may be implemented by adding a new information element (IE) in the message. For example, the bearer type change indication may be implemented by an E-UTRAN radio access bearer (E-RAB) IE ("E-RABs to be changed" IE) to be changed in the message or a PDU session IE ("PDU sessions to be changed/modified" IE) to be changed/modified.

Further, the message including the bearer type change indication may further include information about a bearer/flow whose bearer type is to be changed. The information about the bearer/flow may include at least one of a bearer identifier (ID), a quality of service (QoS) parameter, or a flow ID. In the case of EN-DC, the information about the bearer/flow may include an ID and list of bearers to be changed and a QoS parameter. In the case of multi-RAT dual connectivity, the information about the bearer/flow may include an ID and list of flow to be changed (may be a portion of a specific PDU session or a specific data RB (DRB)), a PDU session ID, and a QoS parameter.

Further, the message including the bearer type change indication may further include a GPRS tunneling protocol (GTP) tunnel endpoint ID (TEID) for the SN for an UL split bearer. The GTP TEID for the SN may correspond to a transport network layer (TNL) address of the SN.

Further, the message including the bearer type change indication may further include information about a changed radio configuration for the bearer/flow of the SN.

The MN, having received the message including the bearer type change indication, determines whether to accept or reject a bearer type change requested by the SN. When the MN determines to accept the bearer type change requested by the SN, in step S910, the MN transmits a message including information for setting a tunnel for the SCG split bearer to the SN. When the SCG bearer is separated into the SCG split bearer, a portion of the data packet should be moved to the MCG bearer side and thus information for setting a tunnel for this is required. The information for setting the tunnel may include a GTP TEID for the MN. The GTP TEID for the MN may correspond to a TNL address of the MN. Information for setting the tunnel may be included in the message for each DRB or PDU.

Further, the message including the information for setting the tunnel may further include an accepted bearer type change indication. The accepted bearer type change indication may indicate that the bearer type change from the SCG bearer to the SCG split bearer requested by the SN has been accepted. The accepted bearer type change indication may be implemented by adding a new IE in the message. For example, the accepted bearer type change indication may be implemented by an E-RAB IE ("E-RABs to be changed" IE) to be changed in the message or a PDU session IE ("PDU sessions to be changed/modified" IE) to be changed/modified.

Further, the message including the information for setting the tunnel may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter determined by the MN. In the case of multi-RAT dual connectivity, the information about the bearer/flow may include an ID and list of the flow to be changed (may be a portion of a specific PDU session or a specific DRB) determined by the MN, a PDU session ID, and a QoS parameter.

Further, the message including the information for setting the tunnel may further include SN configuration information. This is because a configuration of the MN was changed by the bearer type change indication requested by the SN. In order for the SN to be based on the configuration of the MN, it is necessary that the corresponding information is transmitted to the SN.

The SN, having received the message including the information for setting the tunnel, may know that the MN has accepted a bearer type change from the SCG bearer to the SCG split bearer. Accordingly, the SN may perform a changed/final radio resource configuration for changing the SCG bearer to an SCG split bearer. Further, in step S920, the SN may transmit a message including the changed radio configuration for the SN to the MN. The changed radio configuration for the SN may include a final radio configuration for the SCG bearer. Further, the message may further include a GTP TEID for the SN for the UL split bearer.

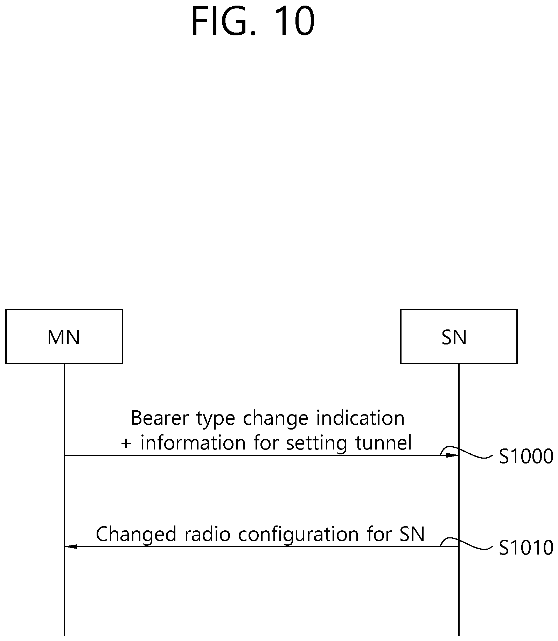

FIG. 10 shows another example of a bearer type change procedure according to an embodiment of the present disclosure. FIG. 10 shows a bearer type change procedure, triggered by an MN, from an SCG bearer to an SCG split bearer or a bearer type change procedure, triggered by an MN, from an MCG bearer/MCG split bearer to an SCG bearer/SCG split bearer. Through the resource status reporting mechanism exchanged between the MN and the SN, when the MN finds that the SN load is getting higher or near the limit, the MN may initiate a bearer type change procedure that splits the SCG bearer into the SCG split bearer. Accordingly, the MN may preemptively reduce an SN load. Alternatively, the MN may initiate a bearer type change procedure from the MCG bearer/MCG split bearer to the SCG bearer/SCG split bearer. In the foregoing description, the MN may be either an eNB or a gNB, and the SN may be a gNB.

In step S1000, the MN transmits a message including a bearer type change indication and information for setting a tunnel for the SCG split bearer to the SN. The bearer type change indication may indicate that the MN wants to change a bearer type from the SCG bearer to the SCG split bearer. Alternatively, the bearer type change indication may indicate that the MN wants to change the bearer type from the MCG bearer/MCG split bearer to the SCG bearer/SCG split bearer. The bearer type change indication may be implemented by adding a new IE in the message. For example, the bearer type change indication may be implemented by an E-RAB IE ("E-RABs to be changed" IE) to be changed in the message or a PDU session IE ("PDU sessions to be changed/modified" IE) to be changed/modified. The information for setting a tunnel for the SCG split bearer may include a GTP TEID for the MN. The GTP TEID for the MN may correspond to a TNL address of the MN. Information for setting the tunnel may be included in the message for each DRB or PDU.

Further, the message including the bearer type change indication and information for setting a tunnel for the SCG split bearer may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter. In the case of multi-RAT dual connectivity, the information about the bearer/flow may include an ID and list of flow to be changed (may be a portion of a specific PDU session or a specific DRB), a PDU session ID, and a QoS parameter.

Further, the message including the bearer type change indication and information for setting a tunnel for the SCG split bearer may further include SN configuration information.

The SN, having received the message including the bearer type change indication and information for setting a tunnel for the SCG split bearer, determines whether to accept or reject the bearer type change requested by the MN. When the SN determines to accept the bearer type change requested by the MN, the SN may perform a changed/final radio resource configuration for changing the SCG bearer to the SCG split bearer. Further, in step S1010, the SN may transmit a message including the changed radio configuration for the SN to the MN. The changed radio configuration for the SN may include a final radio configuration for the SCG bearer. Further, the message may further include a GTP TEID for the SN. The GTP TEID for the SN may be included in the message for each DRB or PDU. Further, the message may further include information about a bearer/flow in which the change is accepted. The information about the bearer/flow may include at least one of a bearer ID, a QoS parameter, and a flow ID.

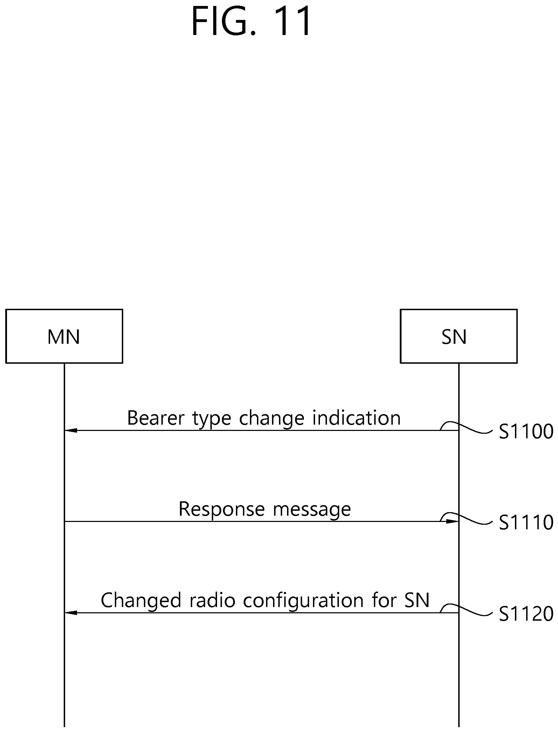

FIG. 11 shows another example of a bearer type change procedure according to an embodiment of the present disclosure. FIG. 11 shows a bearer type change procedure, triggered by an SN, from an SCG split bearer to an SCG bearer. When the SN determines that an overload status thereof has been resolved or is no longer severe, the SN may initiate a bearer type change procedure that turns back the SCG split bearer to the SCG bearer. In the foregoing description, the MN may be either an eNB or a gNB, and the SN may be a gNB.

In step S1100, the SN transmits a message including a bearer type change indication to the MN. The bearer type change indication may indicate that the SN wants to change the bearer type from the SCG split bearer to the SCG bearer. The bearer type change indication may be implemented by adding a new IE in the message. For example, the bearer type change indication may be implemented by an E-RAB IE ("E-RABs to be changed" IE) to be changed in the message or a PDU session IE ("PDU sessions to be changed/modified" IE) to be changed/modified.

Further, the message including the bearer type change indication may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed, and a QoS parameter. In the case of multi-RAT dual connectivity, the information about the bearer/flow may include an ID and list of flow to be changed (may be a portion of a specific PDU session or a specific DRB), a PDU session ID, and a QoS parameter.

Further, the message including the bearer type change indication may further include a DL forwarding GTP TEID for data forwarding to the SN. Further, the message including the bearer type change indication may further include information about the changed radio configuration for the bearer/flow of the SN.

The MN, having received the message including the bearer type change indication, may accept a bearer type change requested by the SN. In step S1110, the MN transmits a response message to the SN. The response message may include an accepted bearer type change indication. The accepted bearer type change indication may indicate that the bearer type change, requested by the SN, from the SCG split bearer to the SCG bearer has been accepted. The accepted bearer type change indication may be implemented by adding a new IE in the message. For example, the accepted bearer type change indication may be implemented by an E-RAB IE ("E-RABs to be changed" IE) to be changed in the message or a PDU session IE ("PDU sessions to be changed/modified" IE) to be changed/modified.

Further, the response message may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter determined by the MN. In the case of multi-RAT dual connectivity, the information about the bearer/flow may include an ID and list of the flow to be changed (may be a portion of a specific PDU session or a specific DRB) determined by the MN, a PDU session ID, and a QoS parameter.

Further, the response message may further include SN configuration information. This is because a configuration of the MN was changed by the bearer type change indication requested by the SN. In order for the SN to be based on the configuration of the MN, it is necessary that the corresponding information is transmitted to the SN.

The SN, having received the response message, may know that the MN has accepted a bearer type change from the SCG split bearer to the SCG bearer. Accordingly, the SN may perform a changed/final radio resource configuration for changing the SCG split bearer to the SCG bearer. Further, in step S1120, the SN may transmit a message including the changed radio configuration for the SN to the MN. The changed radio configuration for the SN may include a final radio configuration for the SCG bearer. Further, the message may further include a DL forwarding GTP TEID for data forwarding to the SN.

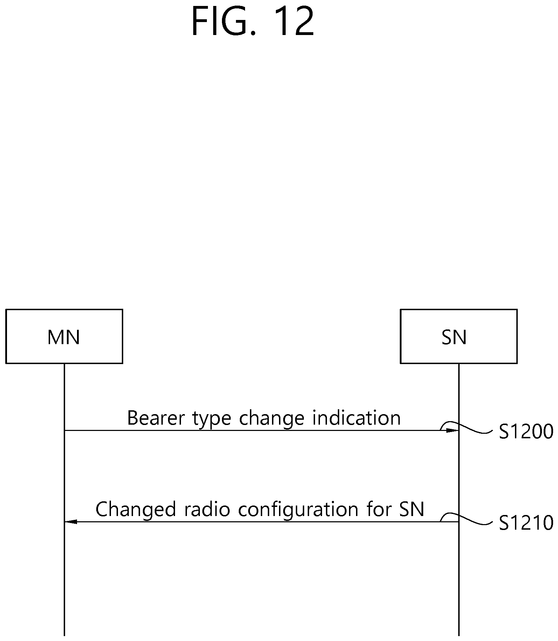

FIG. 12 shows another example of a bearer type change procedure according to an embodiment of the present disclosure. FIG. 12 shows a bearer type change procedure, triggered by an MN, from an SCG split bearer to an SCG bearer or a bearer type change procedure, triggered by an MN, from an SCG bearer/SCG split bearer to an MCG bearer/MCG split bearer. Although a load of the MN is getting higher or near the limit, when the SN does not preempt a bearer type change procedure from the SCG split bearer to the SCG bearer described in FIG. 11, the MN may initiate a bearer type change procedure that returns back the SCG split bearer to the SCG bearer. Therefore, the MN may reduce a load thereof. Alternatively, the MN may initiate a bearer type change procedure from the SCG bearer/SCG split bearer to the MCG bearer/MCG split bearer. In the following description, the MN may be either an eNB or a gNB, and the SN may be a gNB.

In step S1200, the MN transmits a message including a bearer type change indication to the SN. The bearer type change indication may indicate that the MN wants to change the bearer type from the SCG split bearer to the SCG bearer. Alternatively, the bearer type change indication may indicate that the MN wants to change the bearer type from the SCG bearer/SCG split bearer to the MCG bearer/MCG split bearer. The bearer type change indication may be implemented by adding a new IE in the message. For example, the bearer type change indication may be implemented by an E-RAB IE ("E-RABs to be changed" IE) to be changed in the message or a PDU session IE ("PDU sessions to be changed/modified" IE) to be changed/modified.

Further, the message including the bearer type change indication may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter. In the case of multi-RAT dual connectivity, the information about the bearer/flow may include an ID and list of flow to be changed (may be a portion of a specific PDU session or a specific DRB), a PDU session ID, and a QoS parameter.

Further, the message including the bearer type change indication may further include SN configuration information. This is because a configuration of the MN has changed. In order for the SN to be based on the configuration of the MN, it is necessary that the corresponding information is transmitted to the SN.

The SN, having received the message including the bearer type change indication, determines whether to accept or reject the bearer type change requested by the MN. When the SN determines to accept the bearer type change requested by the MN, the SN may perform a changed/final radio resource configuration to change the SCG split bearer to the SCG bearer. Further, in step S1210, the SN may transmit a message including the changed radio configuration for the SN to the MN. The changed radio configuration for the SN may include a final radio configuration for the SCG bearer. Further, the message may further include a GTP TEID for the SN. The GTP TEID for the SN may be included in the message for each DRB or PDU. Further, the message may further include information about a bearer/flow in which a change has been accepted. The information about the bearer/flow may include at least one of a bearer ID, a QoS parameter, and a flow ID.

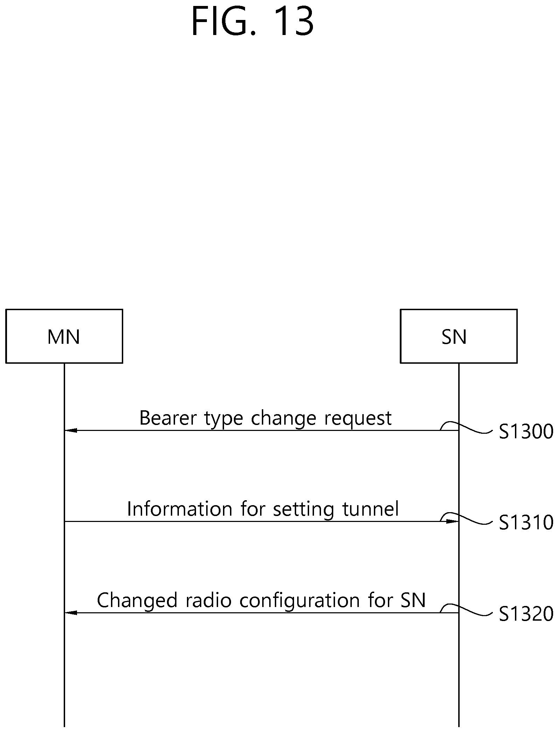

FIG. 13 shows another example of a bearer type change procedure according to an embodiment of the present disclosure. FIG. 13 shows a bearer type change procedure, triggered by an SN, from an SCG bearer/SCG split bearer to an MCG bearer/MCG split bearer. In the following description, the MN may be either an eNB or a gNB, and the SN may be a gNB.

In step S1300, the SN transmits a message including a bearer type change request to the MN. The bearer type change request may indicate that the SN wants to change the bearer type from the SCG bearer/SCG split bearer to the MCG bearer/MCG split bearer. The bearer type change request may be implemented by adding a new IE in the message. For example, the bearer type change request may be implemented by an E-RAB IE ("E-RABs to be changed" IE) to be changed in the message or a PDU session IE ("PDU sessions to be changed/modified" IE) to be changed/modified.

Further, the message including the bearer type change request may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter. In the case of multi-RAT dual connectivity, the information about the bearer/flow may include an ID and list of flow to be changed (may be a portion of a specific PDU session or a specific DRB), a PDU session ID, and a QoS parameter.

Further, the message including the bearer type change request may further include a GTP TEID for the SN. The GTP TEID for the SN may be included in the message for each DRB or PDU. Further, the message including the bearer type change request may further include information about the changed radio configuration for the bearer/flow of the SN.

The MN, having received the message including the bearer type change request, determines whether to accept or reject the bearer type change requested by the SN. When the MN determines to accept the bearer type change requested by the SN, in step S1310, the MN transmits a message including information for setting a tunnel for the MCG bearer/MCG split bearer to the SN. When the SCG bearer/SCG split bearer is changed to the MCG bearer/MCG split bearer, a portion of the data packet should be moved to the MCG bearer side and thus information for setting a tunnel for this is required. The information for setting the tunnel may include a GTP TEID for the MN. The GTP TEID for the MN may correspond to a TNL address of the MN. Information for setting the tunnel may be included in the message for each DRB or PDU.

Further, the message including the information for setting the tunnel may further include an accepted bearer type change indication. The accepted bearer type change indication may indicate that the bearer type change, requested by the SN, from the SCG bearer/SCG split bearer to the MCG bearer/MCG split bearer has been accepted. The accepted bearer type change indication may be implemented by adding a new IE in the message. For example, the accepted bearer type change indication may be implemented by an E-RAB IE ("E-RABs to be changed" IE) to be changed in the message or a PDU session IE ("PDU sessions to be changed/modified" IE) to be changed/modified.

Further, the message including information for setting the tunnel may further include information about a bearer/flow whose bearer type is to be changed. The information about the bearer/flow may include at least one of a bearer ID, a QoS parameter, and a flow ID. In the case of EN-DC, the information about the bearer/flow may include an ID and list of bearers to be changed and a QoS parameter determined by the MN. In the case of multi-RAT dual connectivity, the information about the bearer/flow may include an ID and list of the flow to be changed (may be a portion of a specific PDU session or a specific DRB) determined by the MN, a PDU session ID, and a QoS parameter.

Further, the message including information for setting the tunnel may further include SN configuration information. This is because a configuration of the MN was changed by the bearer type change indication requested by the SN. In order for the SN to be based on the configuration of the MN, it is necessary that the corresponding information is transmitted to the SN.

The SN, having received the message including information for setting the tunnel, may know that the MN has accepted a bearer type change from the SCG bearer/SCG split bearer to the MCG bearer/MCG split bearer. Accordingly, the SN may perform a changed/final radio resource configuration for changing the SCG bearer/SCG split bearer to the MCG bearer/MCG split bearer. Further, in step S1320, the SN may transmit a message including the changed radio configuration for the SN to the MN. The changed radio configuration for the SN may include a final radio configuration for the SCG bearer. Further, the message may further include a GTP TEID for the SN. The GTP TEID for the SN may be included in the message for each DRB or PDU.

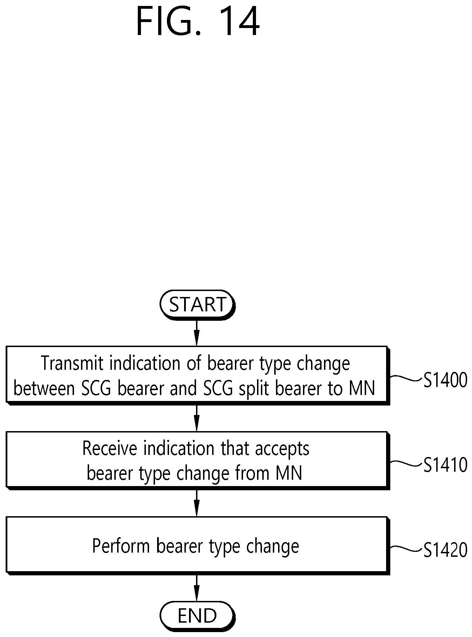

FIG. 14 shows a method of performing a bearer type change procedure between an SCG bearer and an SCG split bearer by an SN of dual connectivity according to an embodiment of the present disclosure. The present embodiment may be applied to the above-described embodiment of FIG. 9 or 11, i.e., a bearer type change procedure triggered by the SN. In the present embodiment, an MN may be either an eNB of LTE or a gNB of NR, and the SN may be a gNB. The dual connectivity may be dual connectivity between LTE and NR or multi-RAT dual connectivity.

In step S1400, the SN transmits an indication of a bearer type change between the SCG bearer and the SCG split bearer to the MN of dual connectivity. In step S1410, the SN receives an indication that accepts the bearer type change from the MN. In step S1420, the SN performs the bearer type change.

The bearer type change may be a change from the SCG bearer to the SCG split bearer. The change from the SCG bearer to the SCG split bearer may be performed when the SN is overloaded or when a quality of the SCG bearer is poor. In this case, together with the indication of the bearer type change, information about the bearer or flow to be changed and/or information about the GTP TEID for the SN may be transmitted to the MN. Further, together with the indication of accepting the bearer type change, information about a bearer or flow to be changed determined by the MN and/or information about a GTP TEID for the MN may be received from the MN.

Alternatively, the bearer type change may be a change from the SCG split bearer to the SCG bearer. The change from the SCG split bearer to the SCG bearer may be performed when an overload status of the SN is solved. In this case, together with the indication of the bearer type change, information about the bearer or flow to be changed and/or a DL forwarding GTP TEID for data forwarding to the SN may be transmitted to the MN. Further, together with the indication of accepting the bearer type change, information about a bearer or flow to be changed determined by the MN may be received from the MN.

According to the present disclosure, the bearer type change between the SCG bearer and the SCG split bearer or the bearer type change between the SCG bearer/SCG split bearer and the MCG bearer/MCG split bearer may be freely performed between the MN and the SN based on a load situation and/or a radio quality in the SN. Therefore, radio resource use of the MN and the SN may be improved for the UE, and may be better serviced from the MN and the SN from a viewpoint of the UE.

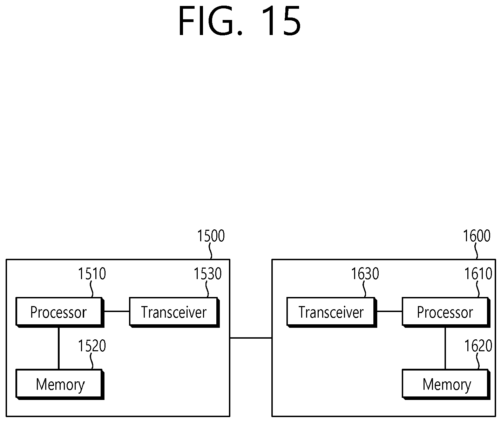

FIG. 15 shows a wireless communication system in which an embodiment of the present disclosure is implemented.

A first RAN node 1500 includes a processor 1510, a memory 1520, and a transceiver 1530. The first RAN node 1500 corresponds to an MN in the embodiment of the present disclosure described in FIGS. 9 to 14. The memory 1520 is connected to the processor 1510 to store various information for driving the processor 1510. The transceiver 1530 is connected to the processor 1510 to transmit a signal to a second RAN node 1600 or receive a signal from a second RAN node 1600.

The processor 1510 may be configured to implement functions, processes, and/or methods related to an interaction with the second RAN node 1600 described in the present disclosure. More specifically, the processor 1510 may control the transceiver 1530 to perform steps S900 to S920 in FIG. 9. The processor 1510 may control the transceiver 1530 to perform steps S1000 to S1010 in FIG. 10. The processor 1510 may control the transceiver 1530 to perform steps S1100 to S1120 in FIG. 11. The processor 1510 may control the transceiver 1530 to perform steps S1200 to S1210 in FIG. 12. The processor 1510 may control the transceiver 1530 to perform steps S1300 to S1320 in FIG. 13. The processor 1510 may control the transceiver 1530 to perform steps S1400 to S1410 in FIG. 14.

The second RAN node 1600 includes a processor 1610, a memory 1620, and a transceiver 1630. The second RAN node 1600 corresponds to an SN in the embodiment of the present disclosure described in FIGS. 9 to 14. The memory 1620 is connected to the processor 1610 to store various information for driving the processor 1610. The transceiver 1630 is connected to the processor 1610 to transmit a signal to the first RAN node 1500 or receive a signal from the first RAN node 1500.

The processor 1610 may be configured to implement functions, processes, and/or methods related to an interaction with the first RAN node 1500 described in the present disclosure. More specifically, the processor 1610 may control the transceiver 1630 to perform steps S900 to S920 in FIG. 9. The processor 1610 may control the transceiver 1630 to perform steps S1000 to S1010 in FIG. 10. The processor 1610 may control the transceiver 1630 to perform steps S1100 to S1120 in FIG. 11. The processor 1610 may control the transceiver 1630 to perform steps S1200 to S1210 in FIG. 12. The processor 1610 may control the transceiver 1630 to perform steps S1300 to S1320 in FIG. 13. The processor 1610 may control the transceiver 1630 to perform steps S1400 to S1420 in FIG. 14.

The first RAN node 1500 and the second RAN node 1600 are connected to each other through an X2 interface or an Xn interface.

The processor 1510, 1610 may include application-specific integrated circuit (ASIC), other chipset, logical circuit and/or data processing device. The memory 1520, 1620 may include read-only memory (ROM), random access memory (RAM), flash memory, memory card, storage medium and/or other storage device. The transceiver 1530, 1630 may include a baseband circuit for processing a radio frequency signal. When an embodiment is implemented by software, the aforementioned method may be implemented by a module (process or function) which performs the aforementioned function. The module may be stored in the memory 1520, 1620 and executed by the processor 1510, 1610. The memory 1520, 1620 may be installed inside or outside the processor 1510, 1610 and may be connected to the processor 1510, 1610 via various well-known means.

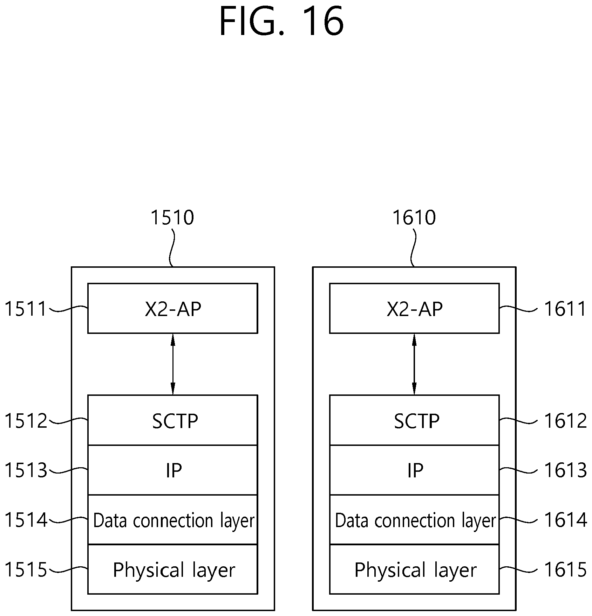

FIG. 16 shows the processors of the RAN node 1 and the RAN node 2 shown in FIG. 15.

The processor 1510 includes an X2 application protocol (X2-AP) layer 1511, a stream control transmission protocol (SCTP) layer 1512, an Internet protocol (IP) layer 1513, a data connection layer 1514, and a physical layer 1515. The X2-AP layer 1511 is included in the radio network layer (RNL). RNL defines a procedure related to the interaction between eNBs. The X2-AP layer 1511 defines the protocol responsible for providing signaling information through the X2 interface. The X2-AP layer 1511 is terminated by two eNBs/gNBs connected to each other through the X2/Xn interface. The X2-AP layer 1511 may be implemented by the X2-AP procedure module. The X2-AP layer 1511 may be configured to implement functions, processes and/or methods of the processor 1510. The SCTP layer 1512, IP layer 1513, data connection layer 1514, and physical layer 1515 may be included in the transport network layer (TNL). TNL provides the user plane and service for signaling delivery.

The processor 1610 includes an X2-AP layer 1611, a SCTP layer 1612, an IP layer 1613, a data connection layer 1614, and a physical layer 1615. The X2-AP layer 1611 is included in the RNL. RNL defines a procedure related to the interaction between eNBs. The X2-AP layer 1611 defines the protocol responsible for providing signaling information through the X2 interface. The X2-AP layer 1611 is terminated by two eNBs/gNBs connected to each other through the X2/Xn interface. The X2-AP layer 1611 may be implemented by the X2-AP procedure module. The X2-AP layer 1611 may be configured to implement functions, processes and/or methods of the processor 1610. The SCTP layer 1612, IP layer 1613, data connection layer 1614, and physical layer 1615 may be included in the TNL. TNL provides the user plane and service for signaling delivery.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method of performing a bearer type change procedure between a secondary cell group (SCG) bearer and an SCG split bearer by a secondary node (SN) of dual connectivity in a wireless communication system, the method comprising:
transmitting an indication of a bearer type change between the SCG bearer and the SCG split bearer to a master node (MN) of the dual connectivity;
receiving an indication that accepts the bearer type change from the MN; and
performing the bearer type change.

2. The method of claim 1, wherein the bearer type change is a change from the SCG bearer to the SCG split bearer.

3. The method of claim 2, wherein the change from the SCG bearer to the SCG split bearer is performed when the SN is overloaded or when a quality of the SCG bearer is poor.

4. The method of claim 2, wherein information about a bearer or flow to be changed is transmitted to the MN together with the indication of the bearer type change.

5. The method of claim 2, wherein information about a GPRS tunneling protocol (GTP) tunnel endpoint ID (TEID) for the SN is transmitted to the MN together with the indication of the bearer type change.

6. The method of claim 2, wherein information about a bearer or flow to be changed determined by the MN is received from the MN together with the indication that accepts the bearer type change.

7. The method of claim 2, wherein information about a GTP TEID for the MN is received from the MN together with the indication that accepts the bearer type change.

8. The method of claim 1, wherein the bearer type change is a change from the SCG split bearer to the SCG bearer.

9. The method of claim 8, wherein the change from the SCG split bearer to the SCG bearer is performed when an overload status of the SN is solved.

10. The method of claim 8, wherein information about a bearer or flow to be changed is transmitted to the MN together with the indication of the bearer type change.

11. The method of claim 8, wherein a downlink (DL) forwarding GTP TEID for data forwarding to the SN is transmitted to the MN together with the indication of the bearer type change.

12. The method of claim 8, wherein information about a bearer or flow to be changed determined by the MN is received from the MN together with the indication that accepts the bearer type change.

13. The method of claim 1, wherein the MN is either an eNodeB (eNB) of long-term evolution (LTE) or a gNB of a new radio access technology (NR), and
wherein the SN is a gNB.

14. The method of claim 1, wherein the dual connectivity is dual connectivity or multi-RAT dual connectivity between LTE and NR.

15. A secondary node (SN) of dual connectivity in a wireless communication system, the SN comprising:
a memory;
a transceiver; and
a processor connected to the memory and the transceiver;
wherein the processor is configured to:
control the transceiver to transmit an indication of a bearer type change between a secondary cell group (SCG) bearer and an SCG split bearer to a master node (MN) of the dual connectivity;
control the transceiver to receive an indication that accepts the bearer type change from the MN, and
perform the bearer type change.
